# EUROPÄISCHE PATENTSCHRIFT

(11) **EP 1 262 362 B1**
(45) Veröffentlichungstag und Bekanntmachung des Hinweises auf die Patenterteilung: **19.04.2006**
(21) Anmeldenummer: 02010705.8
(22) Anmeldetag: 14.05.2002
(51) Int. Cl.: B60N 2/68

(54) **Klappbare Rückenlehne für einen Rücksitz eines Kraftfahrzeugs**
Tiltable backrest for a rear seat of an automotive vehicle
Dossier rabattable pour un siège arrière de véhicule automobile

(30) Priorität: 28.05.2001 DE 10126014
(43) Veröffentlichungstag der Anmeldung: 04.12.2002
(73) Patentinhaber: Dr.Ing. h.c.F. Porsche Aktiengesellschaft, 70435 Stuttgart (DE); SAG-EUROMOTIVE GMBH & CO. KG, 5282 RANSHOFEN (AT)
(72) Erfinder: Jungert, Dieter, 71287 Weissach (DE); Danninger, Christian, 5204 Strasswalchen (AT); Garnweidner, Peter, 5112 Lamprechtshausen (AT)

(56) Entgegenhaltungen:
- EP-A- 0 372 339
- DE-A- 19 705 603
- DE-A- 19 718 067
- FR-A- 2 733 945

## Beschreibung

Die Erfindung bezieht sich auf eine klappbare Rückenlehne für einen Rücksitz eines Kraftfahrzeugs, gemäß Oberbegriff des Anspruchs 1.

Eine gattungsgemäße Rückenlehne ist in der DE 197 18 067 Al beschrieben. Diese Rückenlehne ist über ihre gesamte Lehnenbreite durchgehend ausgebildet. Es liegt also keine rahmenartige Lehnenstruktur vor, wie es beispielsweise aus der DE 197 05 603 A1 bekannt ist. Überdies ist die bekannte Rückenlehne als Strangpresshohlprofil mit wenigstens einer Profilkammer hergestellt. Die Strangpressrichtung des Hohlprofils verläuft in Richtung der Lehnenbreite.

Aufgabe der Erfindung ist es, eine klappbare Rückenlehne der eingangs genannten Art anzugeben, die hinsichtlich einer Kraftaufnahme optimiert ist.

Gelöst wird diese Aufgabe mit einer klappbaren Rückenlehne, welche die in Anspruch 1 genannten Merkmale aufweist. Weitere, die Erfindung ausgestaltende Merkmale sind in den Unteransprüchen angegeben.

Die mit der Erfindung hauptsächlich erzielten Vorteile sind darin zu sehen, dass durch die erfindungsgemäße Strangpressrichtung in Richtung der Lehnenhöhe ein Versagen der Rückenlehne, beispielsweise ein Knicken oder Verbiegen parallel zur Fahrzeugquerachse, weitgehend vermieden wird. Die zwischen den Profilkammern verlaufenden Profilstege des Hohlprofils ermöglichen eine hohe Kraft- bzw. Lastaufnahme durch die Rückenlehne. Die Profilstege können in Bereichen der Rückenlehne vorgesehen werden, die für eine hohe Kraftaufnahme besonders steif ausgebildet werden müssen. Beispielsweise ein Randbereich der Rückenlehne kann eine höhere Anzahl von Profilstegen aufweisen. Auch die Wandstärke der Profilstege kann an Lastanforderungen angepasst werden. Mithin ermöglicht die erfindungsgemäße Rückenlehne eine höhere Kraft- bzw. Lastaufnahme bei optimierten bzw. verringerten Wandstärken des Hohlprofils.

Wird - wie nach Anspruch 3 vorgesehen - die Rücklehne aus mehreren Strangpressprofilen zusammengesetzt, die aneinander befestigt werden, können ausgewählte Bereiche der Rückenlehne nach Kraftaufnahmeanforderungen ausgelegt werden.

Gemäß Anspruch 5 kann eine Wölbung bzw. Abwinkelung in bevorzugter Ausführungsform in einem parallel zu Lehnenhöhe verlaufenden Randbereich der Rückenlehne liegen. Durch die Wölbung verbleibt zwischen der Rückenlehne und einer Fahrzeugwand ein Freiraum, in dem beispielsweise ein Gurtroller angeordnet werden kann.

Insbesondere im Hinblick auf Sicherheitsanforderungen kann die Rückenlehne mit einer Kopfstütze versehen sein. Besonders vorteilhaft stellt sich hier die Verwendung des Strangpresshohlprofils mit der erfindungsgemäßen Pressrichtung heraus, da die Kopfstütze in den Profilkammern des Hohlprofils gehalten bzw. geführt werden kann.

Die Kopfstütze kann in den Profilkammern verschieblich geführt und damit höhenverstellbar sein. Hierfür können - gemäß Anspruch 9 - in die Profilkammern Führungselemente einer Halteeinrichtung für die Kopfstütze eingesetzt werden. Somit entfällt in besonders vorteilhafter Weise eine bisher erforderliche Nachbearbeitung der Rückenlehne, um Ausnehmungen für diese Führungen herzustellen.

Bei der Verwendung der Rückenlehne in Sportwagen hat es sich als vorteilhaft herausgestellt, wenn die Kopfstütze in der Rückenlehne versenkbar ist, um bei einem ungenutzten Rücksitz die Sicht für den Fahrer nach hinten zu verbessern. Für das Versenken der Kopfstütze in der Rückenlehne wird diese entsprechend Anspruch 10 mit einer randoffenen Ausnehmung versehen, in der die eingefahrene bzw. versenkte Kopfstütze zu liegen kommt.

Bei in den Ansprüchen 14 und 15 angegebenen Ausführungsalternativen ist vorteilhaft, dass die Rückenlehne noch steifer ausgebildet werden kann bzw. eine noch höhere Kraft- bzw. Lastaufnahme ermöglicht. Dennoch kann ein dünnwandiges Strangpressprofil für eine weitere Gewichtsoptimierung der Rückenlehne verwendet werden.

Die Erfindung wird nachfolgend anhand von Ausführungsbeispielen mit Bezug auf die Zeichnung näher erläutert.

Es zeigen:
- Fig. 1: eine Frontansicht einer Rückenlehne mit einer Kopfstütze,
- Fig. 2: die Rückenlehne nach Fig. 1 in Schnittdarstellung entlang der Linie II - II und
- Fig. 3: eine Schnittdarstellung der Rückenlehne entsprechend Linie III - III.

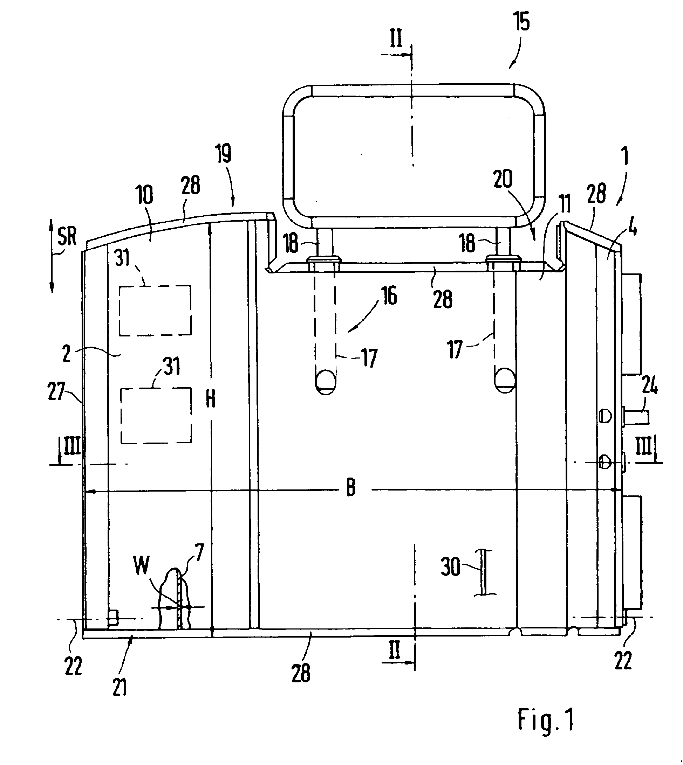

Anhand der Fig. 1 bis 3 wird eine klappbare Rückenlehne 1 für eine Rücksitz eines hier nicht näher dargestellten Kraftfahrzeugs, beispielsweise Personenwagen, erläutert. Die Rückenlehne 1 besitzt eine Vorderseite 2 und eine Rückseite 3, wobei die Vorderseite der Lehnenfläche für einen Insassen zugeordnet und die Rückseite einem Heckbereich des Kraftfahrzeugs zugewandt ist. Ferner ist die Rückenlehne 1 - über ihre Lehnenbreite B gesehen - im Wesentlichen durchgehend, also vollflächig ausgebildet und aus einem Strangpressprofil 4 hergestellt, dessen Strangpressrichtung SR in Richtung der Lehnenhöhe H, also in vertikaler Richtung, verläuft, wobei das Strangpressprofil 4 als Hohlprofil 5 mit mehreren Profilkammern 6 ausgebildet ist, welche Profilkammern von Profilstegen 7 begrenzt werden, die sich zwischen den Wandbereichen 8 und 9 des Hohlprofils 5 erstrecken. Die nebeneinander liegenden Profilkammern 6 erstrecken sich wie die Profilstege 7 auf Grund der Strangpressrichtung SR entlang der Lehnenhöhe H.

Die Rückenlehne 1 kann aus einem einzigen Strangpressprofil 4 hergestellt sein oder mehrere zusammengesetzte Strangpressprofilteile 10 und 11 umfassen, die in einem Verbindungsbereich 12 beispielsweise durch Ineinanderstecken aneinander befestigt werden. Die beiden Strangpressprofilteile 10 und 11 können zusätzlich oder alternativ beispielsweise durch Schweißen, Kleben, Verschrauben, Vernieten oder dergleichen verbunden werden.

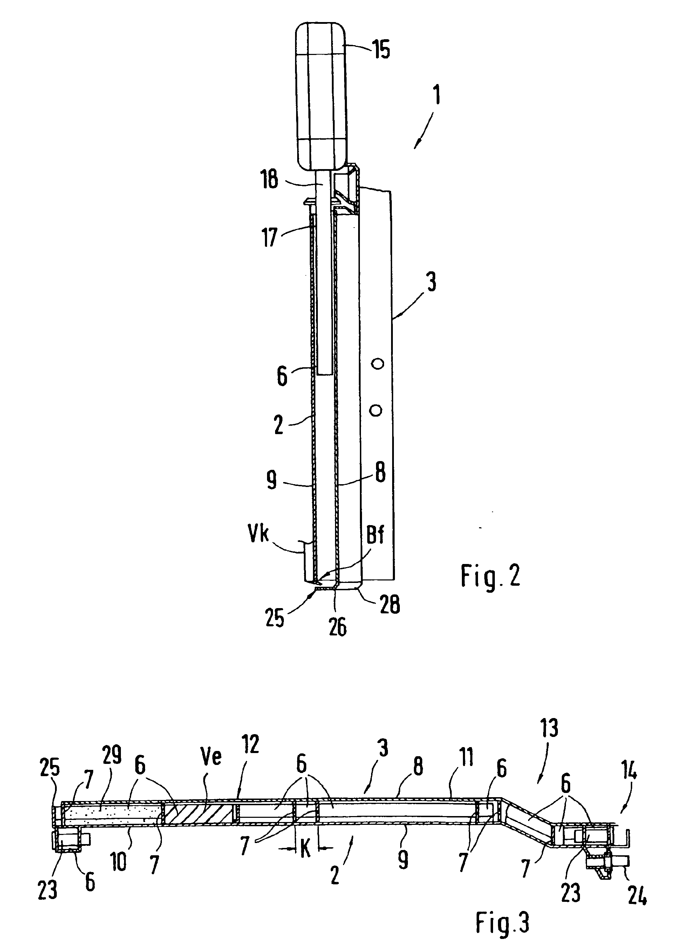

Gemäß Fig. 3 weist die Rückenlehne - im Querschnitt senkrecht zu Lehnenhöhe H gesehen - eine Wölbung bzw. Abwinkelung 13 auf, die vorzugsweise in einem parallel zur Lehnenhöhe H verlaufenden Randbereich 14 liegt, wobei diese Abwinkelung derart ausgerichtet ist, dass sie über die Ebene der Vorderseite 2 bzw. des Wandbereichs 9 übersteht.

Die Rückenlehne 1 ist mit einer Kopfstütze 15 ausgestattet, die in einer Halteeinrichtung 16 der Rückenlehne 1 festgelegt oder in dieser Halteeinrichtung verschiebbar geführt ist, so dass die Kopfstütze höhenverstellbar ist. Die Halteeinrichtung 16 umfasst wenigstens ein Führungselement 17, welches hülsenartig realisiert ist und in eine Profilkammer 6 des Hohlprofils 5 eingesetzt ist. In jedem hülsenartigen Führungselement wird eine Führungsstange 18 der Kopfstütze 15 geführt. Alternativ kann auch lediglich ein Führungselement 17 und eine Führungsstange 18 vorgesehen sein. Um die Kopfstütze 15 zumindest teilweise in der Rückenlehne 1 versenken zu können, ist in dem oberen quer zur Lehnenhöhe H verlaufenden Randbereich 19 der Lehne 1 eine randoffene Ausnehmung 20 vorgesehen, die derart bemessen sein kann, dass die Kopfstütze 15 vollständig darin aufgenommen wird.

Im etwa parallel zum oberen Randbereich 19 verlaufenden unteren Randbereich 21 der Rückenlehne 1 liegt die Klappachse 22 der Rückenlehne 1, welche Klappachse 22 durch in das Hohlprofil 5 eingesetzte Lagerbolzen 23 gebildet sein kann, die beispielsweise mit der hier nicht wiedergegebenen Sitzfläche des Rücksitzes oder mit dem Fahrzeugaufbau schwenkbar verbunden sind. Um die Rückenlehne 1 in ihrer aufrechten Lehnenposition, die der Sitzposition des Rücksitzes entspricht, arretieren bzw. halten zu können, ist eine Verriegelungseinrichtung vorgesehen, die ein lehnenseifiges Verriegelungselement 24 und ein fahrzeugaufbaufestes Verriegelungselement (nicht dargestellt) umfasst. Das lehnenseitige Verriegelungselement 24 kann beispielsweise als Verriegelungsbolzen realisiert sein, welcher mit einer fahrzeugaufbauseitigen verriegelbaren Bolzenaufnahme zusammenwirkt. Derartige Verriegelungseinrichtungen sind an sich bekannt, so dass darauf nicht näher eingegangen wird.

Um eine Verkleidung Vk, beispielsweise ein Bezug, an dem Strangpressprofil 4 befestigen zu können, ist eine wenigstens teilweise um den Rand der Rückenlehne 1 umlaufende Nut 25 vorgesehen, in der ein Befestigungsrand Bf der Lehnenverkleidung Vk festlegbar ist, beispielsweise durch Einklemmen in der Nut 25. Hierfür kann der Befestigungsrand der Lehnenverkleidung in die Nut 25 eingelegt und der freistehende Wandbereich 26 der Nut 25 verformt, beispielsweise umgebogen, werden. In den parallel zur Lehnenhöhe H verlaufenden Randbereichen 27 und 14 der Rückenlehne 1 kann diese umlaufende Nut 25 durch das Strangpressen hergestellt oder nachträglich in das Profil 4 durch Auftrennen einer Profilkammer 6 eingebracht werden. Der freistehende Wandbereich 26 kann alternativ auch beim Strangpressen mit hergestellt werden. Ferner kann der Wandbereich lediglich abschnittsweise vorgesehen sein, so dass mehrere Stege zum Festlegen der Verkleidung Vk gebildet sind. In den Randbereichen 19 und 21 der Rückenlehne 1 können Abschlussteile 28 vorgesehen sein, die an dem Profil 4 befestigt werden und diese Nut 25 aufweisen. Die Verkleidung Vk überspannt vorzugsweise die Rückseite 3 der Lehne 1.

Wenigstens eine der Profilkammern 6 kann zumindest teilweise mit einer Ausschäumung 29 versehen werden. Diese Ausschäumung 29 kann einen Metall und/oder Kunststoff und/oder eine Keramik aufweisenden Schaum umfassen. An Stelle der Ausschäumung könnte in wenigstens eine der Profilkammern 6 auch ein Verstärkungsformelement Ve eingesetzt werden, welches beispielsweise als erstarrtes Schaumformteil, als ein eine Wabenstruktur ausweisendes Formteil oder dergleichen ausgebildet ist. Alternativ oder zusätzlich können in den Wänden 8 und/oder 9 der Rückenlehne 1 Versteifungsrippen - oder Stege 30 vorgesehen sein, die beispielsweise durch Einpressen hergestellt werden. Durch das Ausschäumen der Profilkammer 6 bzw. durch Einlegen des Verstärkungsformelements Ve in die Profilkammer 6 bzw. das Einbringen von Rippen bzw. Stegen in den Wänden 8 und/oder 9 ist somit ein nachträgliches lokales oder vollflächiges Aussteifen des Strangpressprofils 4 möglich.

In höher belasteten Bereichen des Strangpressprofils 4 bzw. der Lehne 1 können mehrere Profilstege 7 und damit mehrere Profilkammern 6 vorgesehen sein. Das Querschnittsprofil der Profilkammern 6 und/oder der Profilstege 7 kann nahezu beliebig gewählt werden. Ein derartiger höher belasteter Bereich der Lehne 1 kann insbesondere in dem Aufnahmebereich für den Lagerbolzen 23 bzw. für das Verriegelungselement 24 gesehen werden. Die Profilkammern 6 und somit die Profilstege 7 sind lastgerecht über die Lehnenbreite B und/oder die Lehnenhöhe H verteilt. Die Profilkammerbreite K und/oder die Wandstärke W der Profilstege 7 können entsprechend der gewünschten Lastaufnahmekapazität der Rückenlehne 1 gewählt werden.

Die Rückenlehne 1 kann durch Warm- und/oder Kaltverformung konturiert werden, wobei durch lokales Verformen ggf. auch eine Materialverfestigung des Strangpressprofils 4 erreicht werden kann, welche die Steifigkeit der Rückenlehne 1 zusätzlich erhöht. Außerdem kann die Rückenlehne 1 durch Materialabtragung hergestellte Durchbrüche bzw. Ausnehmungen 31 aufweisen, wie dies gestrichelt in Fig. 1 zu sehen ist. Vorzugsweise werden sogenannte metallische Knetwerkstoffe, beispielsweise Aluminium oder eine Aluminiumlegierung, für das Strangpressprofil 4 verwendet. Alternative Werkstoffe für das Profil 4 könnten Kunststoffe mit oder ohne Faserverstärkung sein. Denkbar ist es auch, eines der Profilteile 10 oder 11 aus einem metallischen Knetwerkstoff und das andere Profilteil 11 oder 10 aus einem Kunststoff herzustellen.

## Patentansprüche

1. Klappbare Rückenlehne (1) für einen Rücksitz eines Kraftfahrzeugs, insbesondere Personenwagen, welche Rückenlehne - über ihre Lehnenbreite (B) gesehen - im Wesentlichen durchgehend ausgebildet und als Strangpresshohlprofil (4,5) mit wenigstens einer Profilkammer (6) hergestellt ist, **dadurch gekennzeichnet, dass** die Strangpressrichtung (SR) des Strangpressprofils (4) in Richtung der Lehnenhöhe (H) verläuft.

2. Rückenlehne nach Anspruch 1, **dadurch gekennzeichnet, dass** die Rückenlehne (1) aus einem einzigen Strangpressprofil (4) hergestellt ist.

3. Rückenlehne nach Anspruch 1, **dadurch gekennzeichnet, dass** die Rückenlehne (1) mehrere zusammengesetzte Strangpressteilprofile (10, 11) umfasst.

4. Rückenlehne nach einem der vorhergehenden Ansprüche, **dadurch gekennzeichnet, dass** - im Querschnitt senkrecht zur Lehnenhöhe (H) gesehen - die Rückenlehne (1) wenigstens bereichsweise gewölbt oder abgewinkelt ausgebildet ist.

5. Rückenlehne nach Anspruch 4, **dadurch gekennzeichnet, dass** die Wölbung bzw. Abwinkelung (13) in einem parallel zur Lehnenhöhe (H) verlaufenden Randbereich (14) der Rückenlehne (1) liegt.

6. Rückenlehne nach einem der vorhergehenden Ansprüche, **gekennzeichnet durch** eine Kopfstütze (15).

7. Rückenlehnen nach Anspruch 6, **gekennzeichnet durch** eine Halteeinrichtung (16) für die Kopfstütze (15).

8. Rückenlehne nach Anspruch 7, **dadurch gekennzeichnet, dass** die Halteeinrichtung (16) in der Profilkammer (6) angeordnet ist.

9. Rückenlehne nach Anspruch 8, **dadurch gekennzeichnet, dass** wenigstens zwei Profilkammern (6) vorgesehen sind und in jeder der Profilkammern (6) ein Führungselement (17) der Halteeinrichtung (16) eingesetzt ist.

10. Rückenlehne nach einem der vorhergehenden Ansprüche, **dadurch gekennzeichnet, dass** die Rückenlehne (1) an ihrem oberen quer zur Lehnenhöhe (H) verlaufenden Randbereich (19) eine randoffene Ausnehmung (20) besitzt, in der die Kopfstütze (15) zu liegen kommt.

11. Rückenlehne nach einem der vorhergehenden Ansprüche, **gekennzeichnet durch** ein Verriegelungselement (24) einer Verriegelungseinrichtung, die die klappbare Rückenlehne (1) im Kraftfahrzeug in ihrer aufrechten Lehnenposition arretiert.

12. Rückenlehne nach einem der vorhergehenden Ansprüche, **gekennzeichnet durch** eine wenigstens teilweise um den Rand der Rückenlehne (1) umlaufende Nut (25), in der eine Lehnenverkleidung (Vk) festlegbar ist.

13. Rückenlehne nach einem der vorhergehenden Ansprüche, **dadurch gekennzeichnet, dass** die Profilkammern (6) bzw. Profilstege (7) lastgerecht verteilt sind.

14. Rückenlehne nach einem der vorhergehenden Ansprüche, **dadurch gekennzeichnet, dass** wenigstens eine der Profilkammern (6) zumindest teilweise ausgeschäumt ist oder ein Verstärkungsformelement (Ve) aufweist.

15. Rückenlehne nach einem der vorhergehenden Ansprüche, **dadurch gekennzeichnet, dass** die Rückenlehne (1) Versteifungsrippen oder - Stege aufweist.

## Claims

1. A foldable backrest (1) for a rear seat of a motor vehicle, in particular a passenger car, which backrest - as viewed over its width (**B**) - is made substantially continuous and is produced in the form of an extruded hollow profile (4, 5) with at least one profile chamber (6), **characterized in that** the extrusion direction (**SR**) of the extruded profile (4) extends in the direction of the height (**H**) of the backrest.

2. A backrest according to Claim 1, **characterized in that** the backrest (1) is produced from a single extruded profile (4).

3. A backrest according to Claim 1, **characterized in that** the backrest (1) comprises a plurality of assembled extruded profile portions (10, 11).

4. A backrest according to any one of the preceding Claims, **characterized in that** - as viewed in cross-section at a right angle to the height (**H**) of the backrest - the backrest (1) is made curved or angled at least locally.

5. A backrest according to Claim 4, **characterized in that** the curvature or angling (13) is situated in an edge region (14) of the backrest (1) extending parallel to the height (**H**) of the backrest.

6. A backrest according to any one of the preceding Claims, **characterized by** a head support (15).

7. A backrest according to Claim 6, **characterized by** a holding device (16) for the head support (15).

8. A backrest according to Claim 7, **characterized in that** the holding device (16) is situated in the profile chamber (6).

9. A backrest according to Claim 8, **characterized in that** at least two profile chambers (6) are provided, and a guide element (17) of the holding device (16) is inserted in each of the profile chambers (6).

10. A backrest according to any one of the preceding Claims, **characterized in that** the upper edge region (19) of the backrest (1) extending transversely to the height (**H**) of the backrest has a recess (20) which is open towards the edge and in which the head support (15) comes to rest.

11. A backrest according to any one of the preceding Claims, **characterized by** a locking element (24) of a locking device which locks the foldable backrest (1) in its upright position in the motor vehicle.

12. A backrest according to any one of the preceding Claims, **characterized by** a groove (25) which extends at least in part around the edge of the backrest (1) and in which a backrest covering (**Vk**) is capable of being fixed.

13. A backrest according to any one of the preceding Claims, **characterized in that** the profile chambers (6) or profiled webs (7) are distributed in accordance with the load.

14. A backrest according to any one of the preceding Claims, **characterized in that** at least one of the profile chambers (6) is filled with foam at least in part or has a reinforcing shaped element (**Ve**).

15. A backrest according to any one of the preceding Claims, **characterized in that** the backrest (1) has reinforcing ribs or webs.

## Revendications

1. Dossier rabattable (1) pour un siège arrière d'un véhicule automobile, en particulier un véhicule de tourisme, ledit dossier étant réalisé essentiellement en continu, quand on regarde sur sa largeur de dossier B, et fabriqué en tant que profilé creux extrudé (4, 5) avec au moins une chambre de profilé (6), **caractérisé en ce que** la direction d'extrusion (SR) du profilé extrudé (4) s'étend dans la direction de la hauteur de dossier (H).

2. Dossier selon la revendication 1, **caractérisé en ce que** le dossier (1) est fabriqué à partir d'un profilé extrudé unique (4).

3. Dossier selon la revendication 1, **caractérisé en ce que** le dossier (1) comprend plusieurs profilés partiels extrudés (10, 11).

4. Dossier selon l'une quelconque des revendications précédentes, **caractérisé en ce que**, quand on regarde en coupe transversale perpendiculairement à la hauteur de dossier (H), le dossier (1) est réalisé incurvé ou plié au moins par zones.

5. Dossier selon la revendication 4, **caractérisé en ce que** la courbure ou le pliage (13) se situe dans une zone de bordure (14) du dossier (1) s'étendant parallèlement à la hauteur de dossier (H).

6. Dossier selon l'une quelconque des revendications précédentes, **caractérisé par** un appuie-tête (15).

7. Dossier selon la revendication 6, **caractérisé par** un dispositif de fixation (16) pour l'appuie-tête (15).

8. Dossier selon la revendication 7, **caractérisé en ce que** le dispositif de fixation (16) est disposé dans la chambre de profilé (6).

9. Dossier selon la revendication 8, **caractérisé en ce qu'**au moins deux chambres de profilé (6) sont prévues et qu'un élément de guidage (17) du dispositif de fixation (16) est inséré dans chacune des chambres de profilé (6).

10. Dossier selon l'une quelconque des revendications précédentes, **caractérisé en ce que** le dossier (1) possède sur sa zone de bordure (19) supérieure s'étendant transversalement à la hauteur de dossier (H) un évidement ouvert au bord (20) dans lequel l'appuie-tête (15) vient reposer.

11. Dossier selon l'une quelconque des revendications précédentes, **caractérisé par** un élément de verrouillage (24) d'un dispositif de verrouillage qui bloque le dossier rabattable (1) dans le véhicule automobile dans sa position droite.

12. Dossier selon l'une quelconque des revendications précédentes, **caractérisé par** une rainure (25) entourant au moins en partie le bord du dossier (1), dans laquelle un habillage de dossier (Vk) peut être fixé.

13. Dossier selon l'une quelconque des revendications précédentes, **caractérisé en ce que** les chambres de profilé (6) ou les entretoises de profilé (7) sont réparties en fonction de la charge.

14. Dossier selon l'une quelconque des revendications précédentes, **caractérisé en ce qu'**au moins une des chambres de profilé (6) est garnie de moussage au moins en partie ou présente un élément moulé de renforcement (Ve).

15. Dossier selon l'une quelconque des revendications précédentes, **caractérisé en ce que** le dossier (1) présente des nervures ou des moulures de renforcement.
